# Europäisches Patentamt
## European Patent Office
## Office européen des brevets

(19)

(11) Veröffentlichungsnummer: **0 056 244**
**B1**

(12)

# EUROPÄISCHE PATENTSCHRIFT

(45) Veröffentlichungstag der Patentschrift:
08.08.84

(21) Anmeldenummer: **82100045.2**

(22) Anmeldetag: **07.01.82**

(51) Int. Cl.³: **C 08 F 285/00**

(54) **Kautschukpulver.**

(30) Priorität: **13.01.81 DE 3100714**

(43) Veröffentlichungstag der Anmeldung:
**21.07.82 Patentblatt 82/29**

(45) Bekanntmachung des Hinweises auf die Patenterteilung:
**08.08.84 Patentblatt 84/32**

(84) Benannte Vertragsstaaten:
**DE FR GB IT NL**

(56) Entgegenhaltungen:
**FR - A - 2 158 835**
**FR - A - 2 319 655**
**US - A - 4 082 895**
**US - A - 4 205 019**

(73) Patentinhaber: **BAYER AG, Konzernverwaltung RP Patentabteilung, D-5090 Leverkusen 1 Bayerwerk (DE)**

(72) Erfinder: **Lindner, Christian, Dr., Riehler Strasse 200, D-5000 Köln 60 (DE)**
Erfinder: **Ott, Karl-Heinz, Dr., Paul-Klee-Strasse 54, D-5090 Leverkusen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

## Beschreibung

Die Erfindung betrifft rieselfähige Kautschukpulver und ein Verfahren zu ihrer Herstellung.

Kautschukpulver müssen rieselfähig sein, damit eine problemlose Einarbeitung, Compoundierung, Verarbeitung, Lagerung und Handhabbarkeit der Polymerisate gewährleistet ist. Beispielsweise werden synthetische Kautschuke, die zum Aneinanderkleben neigen, mit Talkum, $TiO_2$ oder $SiO_2$ bepudert bzw. beschichtet. Diese Hilfsstoffe können sich aber nachteilig auf die Eigenschaften der Polymerisate auswirken.

In der DE-OS 2 801 817 wird ein Verfahren beschrieben, elastische Pfropfkautschuke in ihrer Handhabbarkeit zu verbessern, indem man ein Vinylpolymerisat an der Oberfläche der Kautschukteilchen koaguliert; diese sind selbst auch im koagulierten Zustand, jedoch nicht vom Koagulationsmedium abgetrennt. Dieses Verfahren erfordert eine gesonderte Polymerisationsstufe für das Vinylpolymerisat; außerdem ändert das ungepfropfte Vinylpolymerisat die Eigenschaften des Pfropfkautschuks.

In der europäischen Patentschrift 0 009 250 wird ein abgewandeltes Verfahren beschrieben; dabei wird zusätzlich zu dem Vinylpolymeren ein organisches Lösungsmittel eingesetzt. Dieses Verfahren hat die gleichen Nachteile, zudem muß das Lösungsmittel wieder entfernt werden. Wendet man die bekannten Methoden auf ungepfropfte Kautschuke an, so entstehen fast immer Polymerisatmischungen mit ungünstigeren Stoffeigenschaften.

Aus der DDR-Patentschrift 86 500 war weiter bekannt, einen Restmonomere enthaltenden Kautschuklatex zu koagulieren und anschließend die verbliebenen (in diesem Fall unerwünschten) Restmonomere durch Polymerisation zu entfernen. Rieselfähiges Kautschukpulver erhält man so nicht, weil die polymerisierten Restmonomeren zu einem mit dem Kautschuk identischen Polymerisat führen.

Aus der DE-OS 2 843 068 war bekannt, in Gegenwart einer Suspension eines ABS-Pfropfcopolymerisats weitere Mengen der Monomeren zu polymerisieren, die bereits die Pfropfhülle bilden.

Gegenstand der Erfindung ist ein Verfahren zur Herstellung von rieselfähigen Kautschukpulvern mit Teilchen eines mittleren Durchmessers von 0,01—10 mm, das dadurch gekennzeichnet ist, daß man einen Latex eines Kautschuks, dessen Latexpartikel aus 99—80 Gew.-%, vorzugsweise 99—90 Gew.-%, Acrylatkautschuk mit einer Glasübergangstemperatur unter 0°C und 1—20 Gew.-%, vorzugsweise 1—10 Gew.-%, darauf aufgepfropftem Polymerisat mit Glasübergangstemperaturen über 0°C bestehen, unter Ausbildung einer wäßrigen Aufschlämmung des Kautschuks vollständig bricht, danach 2—20 Gew.-%, vorzugsweise 5—10 Gew.-%, bezogen auf den Kautschuk, eines oder mehrerer Vinylmonomerer, die Polymerisate mit Glasübergangstemperaturen über 25°C bilden, in die Aufschlämmung einbringt, und das oder die Monomeren, gegebenenfalls nach Zugabe eines Radikalinitiators, polymerisiert.

Ein weiterer Gegenstand der Erfindung sind rieselfähige Kautschukpulver aus Teilchen mit einem mittleren Durchmesser von 0,01—10 mm, bevorzugt 0,05—8 mm, insbesondere bevorzugt 0,1—4 mm, die eine aufpolymerisierte Hülle aus dem Polymerisat oder Copolymerisat eines oder mehrerer Vinylmonomerer, die Polymerisate mit Glasübergangstemperaturen über 25°C bilden, in einer Menge von 2—20 Gew.-%, vorzugsweise 5—10 Gew.-%, enthalten, die dadurch gekennzeichnet sind, daß der Kautschuk ein Latexpolymerisat darstellt, dessen Latexpartikel aus im wesentlichen 99—80 Gew.-% Acrylatkautschuk mit Glasübergangstemperaturen unter 0°C und 1—20 Gew.-% darauf aufgepfropftem Polymer mit Glasübergangstemperaturen über 0°C aufgebaut sind.

Erfindungsgemäß sind alle Kautschuke geeignet, die sich von Acrylaten ableiten, die als wäßrige Emulsion anfallen (Latex) und deren Latexpartikel geringe Anteile aufgepfropften Polymers mit Glasübergangstemperaturen über 0°C aufweisen; dabei können die Acrylate sowie die aufgepfropften Polymerisate unabhängig voneinander unvernetzt, teilvernetzt oder hochvernetzt vorliegen. Als Acrylatkautschuke sind auch solche geeignet, die eine sogenannte Kern/Schalen-Struktur aufweisen.

Als Acrylatkautschuke besonders geeignet sind Acrylsäureester-(Co)-Polymerisate mit Glasübergangstemperaturen unter 0°C, besonders unter 20°C.

Als Acrylatkautschuke im Sinne der Erfindung werden Polymerisate bzw. Copolymerisate aus $C_1$—$C_{12}$-Alkylacrylaten, insbesondere Methyl-, Ethyl-, Propyl-, n-Butyl-Hexylacrylat, sowie Polymerisate, die aus wenigstens 70 Gew.-% $C_1$ bis $C_{12}$-Alkylacrylatpolymerisaten aufgebaut sind, verstanden; als Comonomere für die $C_1$—$C_{12}$-Alkylacrylate können z. B. Styrol, Acrylnitril, Alkylmethacrylat, Butadien, Isopren, Vinylester, Vinylether, Vinylcarbonsäure, Allylalkohol, Allylester, -ether fungieren; die Acrylatkautschuke können ganz oder partiell vernetzt sein, z. B. durch polyfunktionelle Vinyl- bzw. Allylmonomere.

Bevorzugte Acrylatkautschuke sind Emulsionspolymere, die einen Gelgehalt von >60 Gew.-% aufweisen, und die mit polyfunktionellen und/oder pfropfvernetzenden und/oder pfropfaktiven Monomeren vernetzt wurden, z. B. mit Triallyl(iso)cyanurat, Allyl(meth)acrylat, Maleinsäureallylester, etc. Solche Acrylatkautschuke sind bekannt (vgl. DE-OS 2 256 301, DE-OS 2 558 476, DE-AS 2 624 656, Europäisches Patent 0 001 782).

Als Polymerisate mit Glasübergangstemperaturen über 0°C, die auf diese Acrylatkautschuke aufgepfropft sind, sind besonders Polymerisate oder Copolymerisate von Monomeren wie Alkylacrylaten, Alkylmethacrylaten, Styrol, Acrylnitril, -Methylstyrol, Acrylnitril oder Vinylacetat geeignet.

Derartige Kautschuklatices, die die oben beschriebenen Latexpartikel enthalten, werden z. B. durch Emulsionspolymerisation bzw. Emulsionspfropfpolymerisation hergestellt; man kann sie aber auch so herstellen, daß man einen Acrylatkautschuk in Lösung oder Masse herstellt und dann ein Polymerisat mit Glasübergangstemperaturen über 0°C aufpfropft und anschließend diese Kautschuke in eine wäßrige Emulsion, die sich für das erfindungsgemäße Verfahren eignet, überführt.

Das erfindungsgemäße Verfahren kann wie folgt durchgeführt werden:

Zunächst wird die wäßrige Emulsion eines Acrylatkautschuks mit kleinen Anteilen darauf aufgepfropftem Polymerisat mit Glasübergangstemperaturen über 0°C erzeugt.

Dann wird diese Emulsion vollständig gebrochen, z. B. mit Elektrolyten (wie Säuren, Basen), mechanische Einwirkung oder Erhitzen. Bevorzugt ist Koagulation mit wäßrigen Lösungen von Säuren und/ oder Salzen bei Temperaturen von ca. 30 bis 100°C. Erhalten wird eine heterogene Aufschlämmung von diskreten Polymerpartikeln verschiedener Form und Größe in Wasser. Form und Größe der Partikel kann durch Variation der Fällungsbedingungen beeinflußt werden.

In diese Polymerisataufschlämmung werden nun, vorzugsweise bei Temperaturen von ca. 30—100°C, die oder das Vinylmonomere wie Styrol, Acrylnitril, Alkylmethacrylat, Acrylsäure, Methacrylsäure, Vinylacetat, und gegebenenfalls Regler, Radikalinitiatoren (insbesondere wasserlösliche Persulfate) oder Antioxidantien in die stark bewegte Polymerisataufschlämmung eingebracht und radikalisch polymerisiert; dabei ist der Zusatz von Suspendiermitteln nicht erforderlich bzw. zu vermeiden.

Abschließend wird das erfindungsgemäße Polymerisat isoliert, z. B. durch Filtration oder Zentrifugation, und danach getrocknet.

Das erfindungsgemäße Verfahren kann dis-, halb- oder vollkontinuierlich durchgeführt werden.

Die erfindungsgemäßen Polymerisatpulver sind lagerbeständig, rieselfähig und nichtklebend. Sie lassen sich besonders leicht und wirtschaftlich, z. B. durch Schmelzcompoundierung verarbeiten, z. B. zu Elastomeren, Gummi, hochflexiblen Kunststoffen, etc.

## Ausführungsbeispiele

### 1. Herstellung von Acrylatkautschukemulsionen

1.1 In einem Reaktor werden vorgelegt bei 63°C

| | |
|---|---|
| 5000 Gew.-Tle | Wasser |
| 2 Gew.-Tle | Na-Sulfonat von $C_{14}-C_{18}$-Kohlenwasserstoffen |
| 14 Gew.-Tle | Kaliumpersulfat |
| 0,9124 Gew.-Tle | Triallylcyanurat |
| 399,0876 Gew.-Tle | n-Butylacrylat |

Innerhalb von 5 Std. werden nun bei 63°C folgende Mischungen in den Reaktor eindosiert:

Mischung 1:

| | |
|---|---|
| 90 Gew.-Tle | Na-Sulfonat von $C_{14}-C_{18}$-Kohlenwasserstoffen |
| 11 900 Gew.-Tle | Wasser |

Mischung 2:

| | |
|---|---|
| 23,09 Gew.-Tle | Triallylcyanurat |
| 10 100,91 Gew.-Tle | n-Butylacrylat |

Anschließend läßt man 2 Std. bei 65°C auspolymerisieren. Die gebildeten Polymerisate besitzen Gelgehalte über 85 Gew.-%.

1.2 Die Polymerisation des Beispiels 1.1 wird nochmals durchgeführt, aber statt der 2 Gew.-Tle Na-Sulfonat in der Reaktorvorlage werden 200 Gew.-Tle einer Polybutadienkautschukemulsion mit Feststoffgehalten von ca. 35—36% mitvorgelegt.

1.3 In einem Reaktor wird unter Rühren bei 63°C folgende Mischung vorgelegt:

| | |
|---|---|
| 5000 Gew.-Tle | Wasser |
| 5 Gew.-Tle | Kaliumpersulfat |
| 100 Gew.-Tle | Methylmethacrylat |
| 300 Gew.-Tle | Ethylhexylacrylat |
| 2 Gew.-Tle | Na-Sulfonat von $C_{14}-C_{18}$-Kohlenwasserstoffen |

Innerhalb von 4 Std. wurden bei 63°C folgende Mischungen in den Reaktor getrennt eindosiert:

**Mischung 1:**
90 Gew.-Tle Na-Sulfonat von $C_{14}-C_{18}$-Kohlenwasserstoffen
11 900 Gew.-Tle Wasser

**Mischung 2:**
400 Gew.-Tle Methylmethacrylat
9 724 Gew.-Tle Ethylhexylacrylat

Anschließend läßt man 3 Std. bei 65° C auspolymerisieren.


**2. Herstellung von Emulsionen, die gepfropfte Acrylatkautschuke enthalten**

2.1 In einem Reaktor werden vorgelegt:

3296 Gew.-Tle    Latex 1.1
1,5 Gew.-Tle    Kaliumpersulfat
90 Gew.-Tle    Wasser

Bei 65° C werden folgende Lösungen innerhalb von 4 Std. in den Reaktor eindosiert:

**Lösung A:**
146 Gew.-Tle Methylmethacrylat

**Lösung B:**
150 Gew.-Tle Wasser
3 Gew.-Tle Na-Sulfonat von $C_{14}-C_{18}$-Kohlenwasserstoffen

Anschließend läßt man 3 Std. bei 65° C auspolymerisieren.

2.2 Beispiel 2.1 wird wiederholt, aber statt Latex 1.1 wird der Latex 1.2 eingesetzt.
2.3 Beispiel 2.1 wird wiederholt, aber statt Latex 1.1 wird der Latex 1.3 eingesetzt.
2.4 Beispiel 2.1 wird wiederholt, aber als Lösung A wird eine Mischung aus 42 Gew.-Tln Acrylnitril und 105 Gew.-Tln Styrol eingesetzt.


**3. Herstellung der erfindungsgemäßen Kautschukpulver**

3.1 In einem Reaktor werden bei 70° C vorgelegt:

18 800 Gew.-Tle Wasser
245 Gew.-Tle Bittersalz

Unter Rühren läßt man nun in 2 Std. folgende Menge Latex in den Reaktor einlaufen:

11 200 Gew.-Tle Latex 2.1

Nach Beendigung dieses Zulaufs werden 4 Gew.-Tle Kaliumpersulfat in den Reaktor gegeben und anschließend werden 462 Gew.-Tle Methylmethacrylat in 1 Std. gleichmäßig unter Rühren eindosiert. Anschließend rührt man die Aufschlämmung 3 Std. bei 80° C. Dann wird das Polymerisat isoliert.

3.2 Beispiel 3.1 wird wiederholt, anstatt Methylmethacrylat wird eine Mischung aus 130 Gew.-Tln Acrylnitril und 340 Gew.-Tln Styrol in die Kautschukaufschlämmung eindosiert.
3.3 Beispiel 3.1 wird wiederholt, aber statt Latex 2.1 wird der Latex 2.2 eingesetzt.
3.4 Beispiel 3.1 wird wiederholt, aber statt Latex 2.1 wird der Latex 2.3 eingesetzt.
3.5 Beispiel 3.1 wird wiederholt, aber statt Latex 2.1 wird der Latex 2.4 eingesetzt.


**4. Charakterisierung der Produkte 3**

Die Polymerisataufschlämmungen werden mittels einer Laborschleuder, deren Schleuderkammer einen Innendurchmesser von 30 cm aufweist und die mit 1500 U/min arbeitet, bei Raumtemperatur aufgearbeitet. Dabei wird folgendermaßen vorgegangen:
Die in den obigen Beispielen beschriebenen Polymerisataufschlämmungen werden in einer solchen

# 0 056 244

Menge in die Schleuder eingeführt, daß pro Arbeitsgang 1 kg Polymerfeststoff isoliert werden kann; anschließend wird bei laufender Schleuder 20 min mit Wasser derart gewaschen, bis das ablaufende Waschwasser nahezu elektrolytfrei ist. Danach wird 5 min trockengeschleudert. Von diesem trockengeschleuderten Material wird der Wassergehalt bestimmt. Danach trocknet man das feuchte Polymerisat bei 70°C 24 Std. lang auf Blechen in Heißlufttrockenschränken.

Die so anfallenden Polymerisate werden in bezug auf Pulverigkeit und Zusammenkleben charakterisiert.

| Polymer | Restwassergehalt nach Trockenschleudern (Gew.-%) | Charakterisierung der trockenen Polymerisate |
|---|---|---|
| 3.1 | 35 | Rieselfähiges Pulver, das bei Lagerung nicht zusammenklebt |
| 3.2 | 28 | desgl. |
| 3.3 | 35 | desgl. |
| 3.4 | 30 | desgl. |
| 3.5 | 36 | desgl. |

Wie aus dieser Tabelle zu ersehen ist, zeichnen sich die erfindungsgemäßen Polymerisate durch vorteilhafte Pulvereigenschaften aus, die die technologische Weiterverwendbarkeit der Materialien wesentlich vorteilhaft beeinflussen.

## Patentansprüche

1. Verfahren zur Herstellung von rieselfähigen Kautschukpulvern mit Teilchen eines mittleren Durchmessers von 0,01—10 mm, dadurch gekennzeichnet, daß man den Latex eines Kautschuks, dessen Latexpartikel aus 99—80 Gew.-% Acrylatkautschuk mit einer Glasübergangstemperatur unter 0°C und 1—20 Gew.-% darauf aufgepfropftem Polymerisat mit Glasübergangstemperaturen über 0°C bestehen, unter Ausbildung einer wäßrigen Aufschlämmung des Kautschuks vollständig bricht, danach 2—20 Gew.-%, bezogen auf den Kautschuk, eines oder mehrerer Vinylmonomerer, die Polymerisate mit Glasübergangstemperaturen über 25°C bilden, in die Aufschlämmung einbringt und das oder die Monomeren, gegebenenfalls nach Zugabe eines radikalbildenden Katalysators, polymerisiert.

2. Verfahren nach Anspruch 1, dadurch gekennzeichnet, daß Acrylatkautschuke Homo- oder Copolymerisate von Alkylacrylaten mit Kautschukeigenschaften bedeuten.

3. Verfahren nach Anspruch 1, dadurch gekennzeichnet, daß sich die Polymeren mit Glasübergangstemperaturen über 0°C von Monomeren wie Alkylacrylat, Alkylmethacrylat, Styrol, Acrylnitril oder Vinylacetat ableiten.

4. Verfahren nach Anspruch 1, dadurch gekennzeichnet, daß man als Vinylmonomere Styrol, Acrylnitril, Alkylmethacrylat oder Mischungen davon verwendet.

5. Rieselfähige Kautschukpulver aus Teilchen mit einem mittleren Durchmesser von 0,01—10 mm, die eine aufpolymerisierte Hülle aus dem Polymerisat oder Copolymerisat eines oder mehrerer Vinylmonomerer, die Polymerisate mit Glasübergangstemperaturen über 25°C bilden, in einer Menge von 2—20 Gew.-%, bezogen auf den Kautschuk, enthalten, dadurch gekennzeichnet, daß der Kautschuk ein Latexpolymerisat darstellt, dessen Latexpartikel aus im wesentlichen 99—80 Gew.-% Acrylatkautschuk mit Glastemperaturen unter 0°C und 1—20 Gew.-% darauf aufgepfropftem Polymer mit Glasübergangstemperaturen über 0°C aufgebaut sind.

## Claims

1. Process for the production of free flowing rubber powders having particles of an average diameter of 0.01—10 mm, characterised in that the latex of a rubber, of which the latex particles consist of 99—80% by weight of an acrylate rubber having a glass transition temperature of below 0°C and, grafted thereon, 1—20% by weight of a polymer having glass transition temperatures of higher than 0°C, is completely broken to form an aqueous suspension of the rubber, after which 2—20% by weight,

5

based on the rubber, of one or more vinyl monomers which form polymers having glass transition temperatures of higher than 25°C, are introduced into the suspension and the monomer(s) is/are polymerised, optionally after the addition of a radical-forming catalyst.

2. Process according to Claim 1, characterised in that the acrylate rubbers are homopolymers or copolymers of alkyl acrylates having rubber properties.

3. Process according to Claim 1, characterised in that the polymers having glass transition temperatures of higher than 0°C are derived from monomers such as alkyl acrylate, alkyl methacrylate, styrene, acrylonitrile or vinyl acetate.

4. Process according to Claim 1, characterised in that styrene, acrylonitrile, alkyl methacrylate or mixtures thereof are used as the vinyl monomers.

5. Free-flowing rubber powders of particles having an average diameter of 0.01 to 10 mm which contain, polymerised thereon, a shell of the polymer or copolymer of one or more vinyl monomers, which form polymers having glass transition temperatures of higher than 25°C, in a quantity of 2—20% by weight, based on the rubber, characterised in that the rubber is a latex polymer of which the latex particles consist essentially of 99—80% by weight of an acrylate rubber having glass transition temperatures of below 0°C and, grafted thereon, 1—20% by weight of a polymer having glass transition temperatures of higher than 0°C.

## Revendications

1. Procédé de production de poudres de caoutchouc pouvant s'écouler, en particules d'un diamètre moyen de 0,01 à 10 mm, caractérisé en ce qu'on rompt totalement le latex d'un caoutchouc dont les particules de latex sont formées de 99 à 80% en poids de caoutchouc d'acrylate ayant une température de passage par l'état vitreux inférieure à 0°C et 1 à 20% en poids de polymère greffé sur ce caoutchouc, ayant des températures de passage par l'état vitreux supérieures à 0°C, avec formation d'une suspension aqueuse du caoutchouc, on incorpore ensuite à la suspension 2 à 20% en poids, par rapport au caoutchouc, d'un ou plusieurs monomères vinyliques qui forment des polymères avec des températures de passage par l'état vitreux de plus de 25°C et on polymérise le ou les monomères éventuellement après addition d'un catalyseur engendrant des radicaux.

2. Procédé suivant la revendication 1, caractérisé en ce que les caoutchoucs d'acrylate sont des homopolymères ou des copolymères d'acrylates d'alkyle à propriétés de caoutchouc.

3. Procédé suivant la revendication 1, caractérisé en ce que les polymères ayant des températures de passage par l'état vitreux de plus de 0°C sont dérivés de monomères tels qu'un acrylate d'alkyle, un méthacrylate d'alkyle, le styrène, l'acrylonitrile ou l'acétate de vinyle.

4. Procédé suivant la revendication 1, caractérisé en ce qu'on utilise comme monomères vinyliques le styrène, l'acrylonitrile, un méthacrylate d'alkyle, ou leurs mélanges.

5. Poudres de caoutchouc pouvant s'écouler, formées de particules ayant un diamètre moyen de 0,01 à 10 mm, qui comportent une enveloppe polymérisée en polymère ou en copolymère d'un ou plusieurs monomères vinyliques qui forment des polymères ayant des températures de passage par l'état vitreux supérieures à 25°C, en une quantité de 2 à 20% en poids par rapport au caoutchouc, caractérisées en ce que le caoutchouc représente un produit de polymérisation sous forme de latex dont les particules de latex sont formées essentiellement de 99 à 80% en poids de caoutchouc d'acrylate avec des températures de passage par l'état vitreux inférieures à 0°C et 1 à 20% en poids de polymère greffé sur ce caoutchouc, avec des températures de passage par l'état vitreux supérieures à 0°C.